# EUROPEAN PATENT APPLICATION

(11) **EP 4 407 828 A1**
(43) Date of publication of application: **31.07.2024**
(21) Application number: 21957907.5
(22) Date of filing: 24.09.2021
(51) Int. Cl.: H02J 7/00, H02J 50/90

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); XU, Weijie, Dongguan, Guangdong 523860 (CN); ZUO, Zhisong, Dongguan, Guangdong 523860 (CN); ZHANG, Zhi, Dongguan, Guangdong 523860 (CN)
(74) Representative: Novagraaf Technologies
(86) International application number: PCT/CN2021/120397
(87) International publication number: WO 2023/044780

(57) **Abstract**

Embodiments of the present application provide a wireless communication method and a device, the method comprising: a terminal device determines positioning information of the terminal device according to a first signal; and the terminal device reports the positioning information, wherein the first signal is used for supplying energy to the terminal device, and the first signal corresponds to a first network device that generates the first signal and/or space information of the first signal. In this way, the terminal device can be positioned, and the position of an item attached to the terminal device can thus be positioned.

## Description

### TECHNICAL FIELD

Embodiments of the present disclosure relate to the field of communications and more particularly to a method for wireless communication and a device for wireless communication.

### BACKGROUND

At present, many communication industries have high requirements for power consumption of a terminal device. Based on this, the applications of the zero-power terminal have become key technologies in many communication industries.

The zero-power terminal can be used in various scenarios. For example, the zero-power terminal can be set on goods in the scenario of logistics, or can be set on animals in the scenario of an animal husbandry farm, or can be set on users or users' items, or the like. In these scenarios, it is often required for positioning objects where the zero-power terminal is located. In other words, the positioning of the zero-power terminal is critical at present.

### SUMMARY

The embodiments of the present disclosure provide a method for wireless communication and a device for wireless communication, thereby positioning a terminal device, and further positioning a location of an object to which the terminal device is attached.

In a first aspect, there is provided a method for wireless communication, which includes the following operations.

A terminal device determines positioning information of the terminal device based on a first signal.

The terminal device reports the positioning information.

Here, the first signal is used for supplying power to the terminal device, and the first signal corresponds to a first network device generating the first signal and/or spatial information of the first signal.

In a second aspect, there is provided a method for wireless communication, which includes the following operations.

A first network device sends a first signal to a terminal device.

Here, the first signal is used for supplying power to the terminal device and is used for determining positioning information of the terminal device, and the first signal corresponds to a first network device generating the first signal and/or spatial information of the first signal.

In a third aspect, there is provided a method for wireless communication, which includes the following operations.

A second network device receives positioning information or location information of a terminal device.

Here, the positioning information is determined based on a first signal and is used for determining the location information of the terminal device, the first signal is used for supplying power to the terminal device, and the first signal corresponds to a first network device generating the first signal and/or spatial information of the first signal.

In a fourth aspect, there is provided a terminal device which includes a processing unit and a communication unit.

The processing unit is configured to determine positioning information of the terminal device based on a first signal.

The communication unit is configured to report the positioning information.

Here, the first signal is used for supplying power to the terminal device.

In a fifth aspect, there is provided a network device. The network device is a first network device which includes a communication unit.

The communication unit is configured to send a first signal to a terminal device. Here, the first signal is used for supplying power to the terminal device and is used for determining positioning information of the terminal device.

In a sixth aspect, there is provided a network device. The network device is a second network device which includes a communication unit.

The communication unit is configured to receive positioning information or location information of a terminal device.

Here, the positioning information is determined based on a first signal and is used for determining the location information of the terminal device, and the first signal is used for supplying power to the terminal device.

In a seventh aspect, there is provided a terminal device which includes a processor and a memory. The memory is used for storing a computer program, and the processor is configured to invoke and run the computer program stored in the memory to perform the method in the first aspect or each implementation thereof.

In an eighth aspect, there is provided a network device which includes a processor and a memory. The memory is used for storing a computer program, and the processor is configured to invoke and run the computer program stored in the memory to perform the method in the second aspect, the third aspect or each implementation thereof.

In a ninth aspect, there is provided an apparatus for implementing the method in any one of the first to third aspects or each implementation thereof.

In particular, the apparatus includes a processor configured to invoke and run a computer program from a memory to cause a device installed with the apparatus to perform the method in any one of the first to third aspects or each implementations thereof.

In a tenth aspect, there is provided a computer-readable storage medium for storing a computer program that causes a computer to perform the method in any one of the first to third aspects or each implementations thereof.

In an eleventh aspect, there is provided a computer program product including computer program instructions that cause a computer to perform the method in any one of the first to third aspects or each implementations thereof.

In a twelfth aspect, there is provided a computer program that, when run on a computer, causes a computer to perform the method in any one of the first to third aspects or each implementations thereof.

According to the technical solutions of the present disclosure, a terminal device can determine positioning information of the terminal device based on the first signal and report the positioning information, so that a network side can realize the positioning of the terminal device based on the positioning information, and thus can further realize positioning a location of an object to which the terminal device is attached.

### BRIEF DESCRIPTION OF THE DRAWINGS

FIG. 1 is a diagram of architecture of a communication system according to an embodiment of the present disclosure.
FIG. 2 is a diagram of a zero-power communication system according to an embodiment of the present disclosure.
FIG. 3 is a diagram of back scattering communication according to an embodiment of the present disclosure.
FIG. 4 is a diagram of power harvesting according to an embodiment of the present disclosure.
FIG. 5 is a circuit diagram of resistance load modulation according to an embodiment of the present disclosure.
FIG. 6 is a diagram of a communication system according to an embodiment of the present disclosure.
FIG. 7 is a flowchart of a method for wireless communication according to an embodiment of the present disclosure.
FIG. 8 is a diagram of a communication system according to an embodiment of the present disclosure.
FIG. 9 is a diagram of another communication system according to an embodiment of the present disclosure.
FIG. 10 illustrates a block diagram of a terminal device 1000 according to an embodiment of the present disclosure.
FIG. 11 illustrates a block diagram of a network device 1100 according to an embodiment of the present disclosure.
FIG. 12 illustrates a block diagram of a network device 1200 according to an embodiment of the present disclosure.
FIG. 13 is a diagram of a structure of a communication device 1300 according to an embodiment of the present disclosure.
FIG. 14 is a diagram of a structure of an apparatus according to an embodiment of the present disclosure.

### DETAILED DESCRIPTION

The technical solutions of the embodiments of the present disclosure will be described below in conjunction with the drawings in the embodiments of the present disclosure. It will be apparent that the described embodiments are part of the embodiments of the present disclosure, but not all of the embodiments of the present disclosure. Based on the embodiments in the present disclosure, all other embodiments obtained by those of ordinary skill in the art without making creative efforts fall within the scope of protection of the present disclosure.

It should be understood that the terms "system" and "network" herein are often used interchangeably. The term "and/or" herein is only an association relationship describing associated objects, which represents that there may be three relationships. For example, "A and/or B" may represent three situations: A exists alone, A and B exist at the same time and B exists alone. In addition, the character "/" herein generally indicates that the associated objects before and after the character "/" are in an "or" relationship.

In the description of the embodiments of the present disclosure, the term "correspondence" may represent that there is a direct correspondence or an indirect correspondence relationship between the two, or may represent that there is an association relationship between the two, or may be a relationship between indication and being indicated, configuration and being configured, and the like.

The embodiments of the present disclosure can be applied to various communication systems, such as: Global System of Mobile communication (GSM) systems, Code Division Multiple Access (CDMA) systems, Wideband Code Division Multiple Access (WCDMA) systems, General Packet Radio Service (GPRS), Long Term Evolution (LTE) systems, Advanced long term evolution (LTE-A) systems, New Radio (NR) systems, evolution systems of NR systems, and LTE-based access to unlicensed spectrum (LTE-U) systems, NR-based access to unlicensed spectrum (NR-U) systems, Universal Mobile Telecommunication Systems (UMTS), Wireless Local Area Networks (WLAN), Wireless Fidelity (WiFi), next generation communication systems, zero-power communication systems, cellular Internet of Things (IoT), cellular passive Internet of Things or other communication systems.

The cellular Internet of Things is a development product of a combination of cellular mobile communication network(s) and Internet of Things. The cellular passive Internet of Things is also called passive cellular Internet of Things, which is a combination of network devices and passive terminals. In the cellular passive Internet of Things, each passive terminal can communicate with another passive terminal through the network device, or the passive terminals can communicate in a Device to Device (D2D) manner, while the network device only needs to send carrier signals, that is, power supply signals, so as to supply power to the passive terminals.

In general, conventional communication systems support a limited number of connections and are easy to implement. However, with the development of communication technologies, mobile communication systems will not only support conventional communications, but also support, for example, D2D communication, Machine to Machine (M2M) communication, Machine Type Communication (MTC), Vehicle to Vehicle (V2V) communication, and the like. The embodiments of the present disclosure can also be applied to these communication systems.

In an embodiment, the communication system in the embodiments of the present disclosure can be applied to a Carrier Aggregation (CA) scenario, a Dual Connectivity (DC) scenario, and/or a Standalone (SA) network deployment scenario.

The applied spectrum is not limited by the embodiments of the present disclosure. For example, the embodiments of the present disclosure may be applied to a licensed spectrum or an unlicensed spectrum.

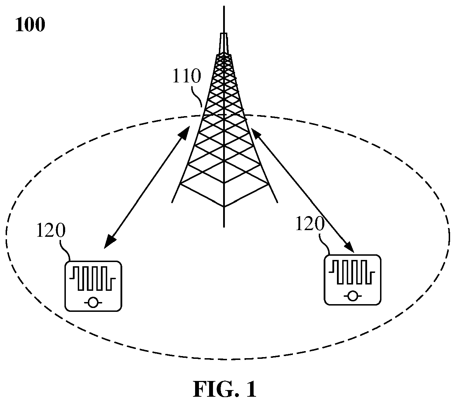

Exemplarily, a communication system 100 applied in the embodiments of the present disclosure is illustrated in FIG. 1. The communication system 100 may include a network device 110, which may be a device that communicates with a terminal device 120 (or referred to as a communication terminal or terminal). The network device 110 may provide communication coverage for a particular geographic area and may communicate with terminal devices located within the coverage area.

FIG. 1 exemplarily illustrates one network device and two terminal devices. In an embodiment, the communication system 100 may include multiple network devices and other numbers of terminal devices may be included within the coverage area of each network device, which is not limited by the embodiments of the present disclosure.

In an embodiment, the communication system 100 may further include other network entities, such as network controllers, mobility management entities and the like, which are not limited by the embodiments of the present disclosure.

It should be understood that a device having a communication function in a network/system in the embodiments of the present disclosure may be referred to as a communication device. Taking the communication system 100 illustrated in FIG. 1 as an example, the communication device may include a network device 110 and a terminal device 120 that have a communication function, and the network device 110 and the terminal device 120 may be specific devices described above and will not be described here. The communication device may further include other devices in the communication system 100, such as a network controller, a mobility management entity and other network entities, which are not limited in the embodiments of the present disclosure.

The embodiments of the present disclosure describe various embodiments in connection with the terminal device and the network device. The network device may be a device for communicating with a mobile device. The network device may be an Access Point (AP) in a WLAN, a Base Transceiver Station (BTS) in a GSM or in a CDMA, a NodeB (NB) in a WCDMA system, an Evolutional Node B (eNB or eNodeB) in a LTE, a relay station or an Access Point, a vehicle-mounted device, a wearable device, a network device (gNB) in an NR network or a network device in a future evolved Public Land Mobile Network (PLMN), or the like.

In the embodiments of the present disclosure, the network device provides services for a cell, and the terminal device communicates with the network device through transmission resources (e.g., frequency domain resources, or spectrum resources) used by the cell. The cell may be a cell corresponding to the network device (e.g., base station), and the cell may belong to a macro base station or belong to a base station corresponding to a Small cell. The Small cell may include a Metro cell, a Micro cell, a Pico cell, a Femto cell, and the like. These Small cells have the characteristics of small coverage and low transmit power, and are suitable for providing high-speed data transmission services.

In the embodiments of the present disclosure, a terminal device may also be referred to as a User Equipment, an access terminal, a subscriber unit, a subscriber station, a mobile station, a mobile platform, a remote station, a remote terminal, a mobile device, a user terminal, a terminal, a wireless communication device, a user agent or a user apparatus, or the like. The terminal device may be a STAION (ST) in a WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing devices connected to a wireless modem, a vehicle-mounted device, a wearable device, a terminal device in a next generation communication system, such as a terminal device in an NR network or a terminal device in a future evolved PLMN, or a zero-power terminal.

By way of example but not limitation, in the embodiments of the present disclosure, the terminal device may also be a wearable device. The wearable device can also be called a wearable smart device, which is a general name of wearable devices developed through the application of wearable technologies for intelligent design of daily wear, such as glasses, gloves, watches, clothing and shoes. The wearable device is a portable device that is worn directly on the body or integrated into the user's clothes or accessories. The wearable device is not only a kind of hardware device, but also realizes powerful functions through software support, data interaction and cloud interaction. The generalized wearable smart device includes devices with full functions and large sizes, which can realize complete or partial functions without relying on smart phones, such as smart watches or smart glasses; and includes devices that only focus on a certain kind of application function and need to be used in conjunction with other devices (such as smart phones), such as various smart bracelets and smart jewelry for monitoring physical signs.

In the embodiments of the present disclosure, for the terminal device, other devices (such as network devices) are required for supplying power to the terminal device. Therefore, in the embodiments of the present disclosure, the terminal device can be a zero-power terminal. Of course, the terminal device can also be any other terminal device that is required to be powered, which is not limited in the present disclosure.

Exemplarily, in a zero-power communication system, a terminal device is powered mainly by a network device. The related techniques of the zero-power communication technology will be described below.

### 1. Classification of zero-power terminals

Based on the power sources and usages of the zero-power terminals, the zero-power terminals may be divided into the following types.

### (1) Passive zero-power terminal

The passive zero-power terminal does not need a built-in battery. When the passive zero-power terminal approaches the network device, the passive zero-power terminal is in a near-field range formed by radiation of an antenna of the network device. Therefore, an antenna of the passive zero-power terminal generates an induced current through electromagnetic induction, and the induced current drives a low-power chip circuit of the passive zero-power terminal, so as to realize signal demodulation for a forward link and signal modulation for a back scattering link. For the back scattering link, the passive zero-power terminal uses back scattering implementation for signal transmission.

Therefore, no matter for the forward link or the back scattering link, the passive zero-power terminal does not need the built-in battery to drive the low-power chip circuit, so the passive zero-power terminal is a zero-power terminal in the true sense.

In addition, a Radio Frequency (RF) circuit and a baseband circuit of the passive zero-power terminal are very simple. For example, a Low Noise Amplifier (LNA), a Power Amplifier (PA), a crystal oscillator, an Analog-to-Digital Converter (ADC) and the like are not required by the passive zero-power terminal, and thus the passive zero-power terminal has many advantages, such as small size, light weight, very cheap price and long service life.

### (2) Semi-passive zero-power terminal

The semi-passive zero-power terminal itself is not installed with conventional batteries, but can harvest radio power through an RF power harvesting module and store the harvested power in a power storage unit, such as a capacitor. After obtaining the power, the power storage unit can drive a low-power chip circuit of the semi-passive zero-power terminal to realize signal demodulation for a forward link and signal modulation for a back scattering link. For the back scattering link, the semi-passive zero-power terminal uses back scattering implementation for signal transmission.

Therefore, no matter for the forward link or the back scattering link, the semi-passive zero-power terminal does not need built-in battery to drive the low-power chip circuit. Although the semi-passive zero-power terminal has the power storage unit for power storage, the power of the semi-passive zero-power terminal still comes from the radio power harvested by the RF power harvesting module, so the semi-passive zero-power terminal is also a zero-power terminal in the true sense.

In addition, the semi-passive zero-power terminal inherits many advantages of the passive zero-power terminal, so the semi-passive zero-power terminal has many advantages such as small size, light weight, very cheap price and long service life.

### (3) Active zero-power terminal

The zero-power terminal used in some scenarios can also be an active zero-power terminal which can have a built-in battery. The battery is used for driving a low-power chip circuit of the zero-power terminal, so as to realize signal demodulation for a forward link and signal modulation for a back scattering link. However, for the back scattering link, the active zero-power terminal can use back scattering implementation for signal transmission. Therefore, the zero-power of this kind of terminal is mainly reflected in the fact that the signal transmission on the back scattering link does not need to consume the power of the terminal itself, but uses the back scattering implementation.

The built-in battery of the active zero-power terminal can supply power to the low-power chip circuit, so as to increase the read and write distance of the active zero-power terminal and improve the reliability of communication. Therefore, the active zero-power terminal can be applied in some scenarios with relatively high requirements on communication distance and read delay.

### 2. The principle of technologies of zero-power communication

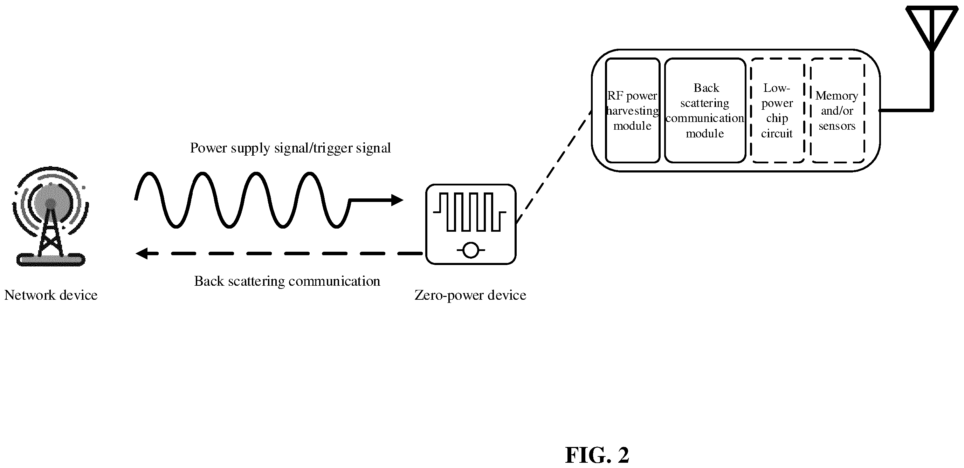

The zero-power communication adopts technologies of power harvesting and back scattering communication. A zero-power communication network consists of a network device and a zero-power terminal, as illustrated in FIG. 2. The zero-power terminal here can be the semi-passive zero-power terminal described above. The network device is used for sending, to the zero-power terminal, a power supply signal and a downlink communication signal and for receiving a back scattering signal of the zero-power terminal. The zero-power terminal may include an RF power harvesting module, a back scattering communication module, and a low-power chip circuit. In addition, the zero-power terminal can also have a memory for storing some basic information (such as object identifier), and can further include sensors for acquiring sensing data such as ambient temperature and ambient humidity.

In the embodiments of the present disclosure, the power supply signal is used for supplying power to the zero-power terminal to trigger the zero-power terminal to work. Therefore, the power supply signal is also referred to as a trigger signal. Alternatively, the power supply signal is also referred to as a carrier signal.

The key technologies of the zero-power communication mainly include RF power harvesting and back scattering communication.

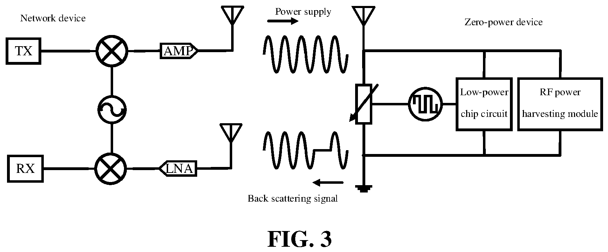

As illustrated in FIG. 3, the zero-power terminal receives the power supply signal sent by the network device, harvests power through the RF power harvesting module, and then supplies the power to the low-power chip circuit, modulates the power supply signal and performs back scattering on the modulated power supply signal. The main characteristics are as follows.
(1) The zero-power terminal does not actively transmit signals, and realizes back scattering communication by modulating the power supply signal.
(2) The zero-power terminal does not rely on the traditional active power amplifier transmitter, and uses the low-power chip circuit to greatly reduce the complexity of hardware.
(3) Battery-free communication can be realized by combining power harvesting.

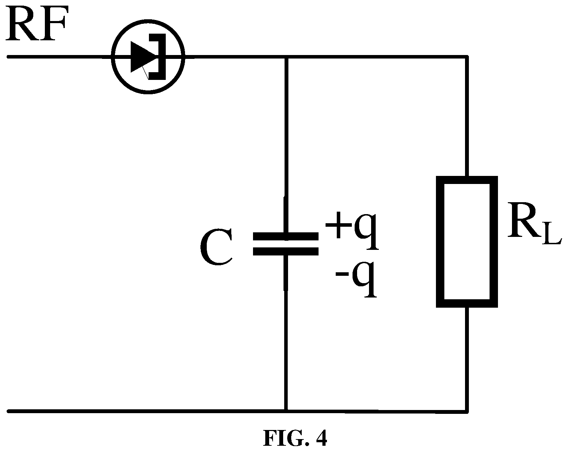

As illustrated in FIG. 4, the zero-power terminal can use the RF power harvesting module to harvest space electromagnetic wave power through electromagnetic induction, and then drive the low-power chip circuit and the sensors.

Load modulation is a method often used by the zero-power terminal to transmit data to the network device. The load modulation adjusts electrical parameters of the oscillation loop of the zero-power terminal according to the beat of the data stream, so that the size and the phase of impedance of the zero-power device are changed accordingly, and thus the modulation process is completed. The technology of the load modulation mainly includes resistance load modulation and capacitance load modulation.

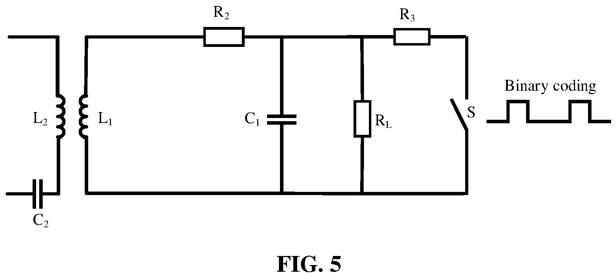

In the resistance load modulation, a load is connected in parallel to a resistor which is called a load modulation resistor. The resistor is turned on and turned off according to the clock of the data stream, and on-off of a switch S is controlled by binary data coding. The circuit diagram of resistance load modulation is illustrated in FIG. 5.

In the capacitance load modulation, the load is connected in parallel to a capacitor which replaces the load modulation resistor controlled by the binary data coding in FIG. 5.

The data transmitted by the zero-power terminal can be represented as the binary "1" and "0" in different forms of codes. Radio frequency identification systems generally use one of the following coding methods: Non Return Zero (NRZ) inverted coding, Manchester coding, Unipolar RZ coding, differential biphase (DBP) coding, Miller coding and differential coding. Generally speaking, 0 and 1 are represented by different pulse signals.

As mentioned above, at present, many communication industries have high requirements for power consumption of a terminal device. Based on this, the applications of the zero-power terminal have become key technologies in many communication industries. The zero-power terminal can be used in various scenarios. For example, the zero-power terminal can be set on goods in the scenario of logistics, or can be set on animals in the scenario of an animal husbandry farm, or can be set on users or users' items, or the like. In these scenarios, it is often required for positioning objects where the zero-power terminal is located. In other words, the positioning of the zero-power terminal is critical at present.

In order to solve the above technical problems, in the embodiment of the present disclosure, the terminal device can determine positioning information of the terminal device based on a first signal, and the first signal is used for supplying power to the terminal device.

It should be understood that the technical solutions of the present disclosure can be applied to, but is not limited to, a first scenario, a second scenario, a third scenario a fourth scenario and a fifth scenario as follows.

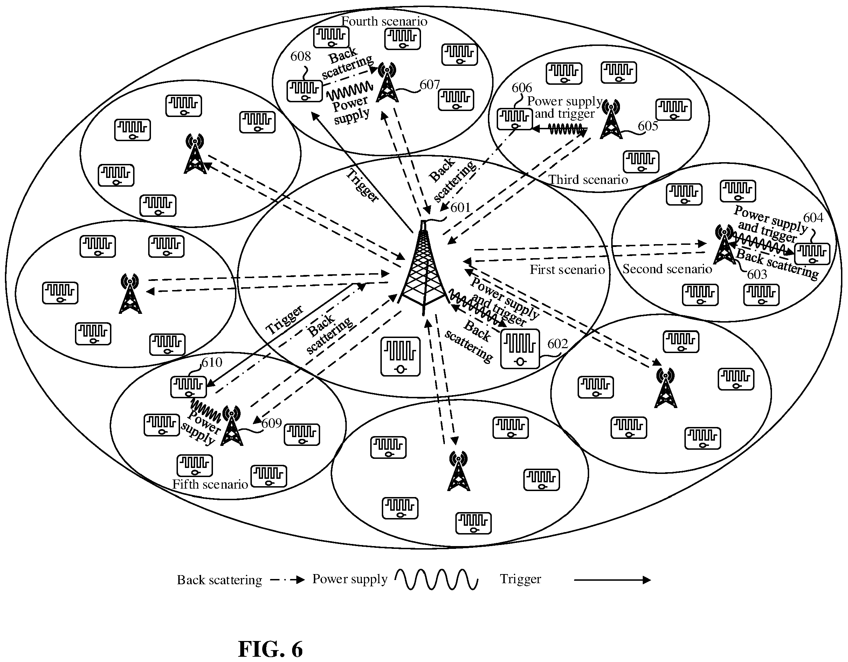

FIG. 6 is a diagram of a communication system according to an embodiment of the present disclosure. For the first scenario, as illustrated in FIG. 6, a network device 601 can supply power to a terminal device 602 and can trigger the terminal device 602 to report positioning information of the terminal device 602, and the terminal device 602 can report the positioning information of the terminal device 602 to the network device 601 through back scattering so that the network device 601 can determine location information of the terminal device 602 based on the positioning information.

For the second scenario, as illustrated in FIG. 6, a network device 603 can supply power to a terminal device 604 and trigger the terminal device 602 to report positioning information of the terminal device 604, the terminal device 604 can report the positioning information of the terminal device 604 to the network device 603 through back scattering, and the network device 603 can feed back the positioning information to the network device 601 so that the network device 601 can determine location information of the terminal device 604 based on the positioning information, or the network device 603 can determine location information of the terminal device 604 based on the positioning information and feed back the location information to the network device 601.

For the third scenario, as illustrated in FIG. 6, a network device 605 can supply power to a terminal device 606 and can trigger the terminal device 606 to report positioning information of the terminal device 606, the terminal device 606 can report the positioning information of the terminal device 606 to the network device 601 through back scattering, and the network device 601 can determine location information of the terminal device based on the positioning information.

For the fourth scenario, as illustrated in FIG. 6, a network device 607 can supply power to a terminal device 608, the network device 601 can trigger the terminal device 608 to report positioning information of the terminal device 608, the terminal device 608 can report the positioning information of the terminal device 608 to the network device 607 through back scattering, and the network device 607 can feed back the positioning information to the network device 601 so that the network device 601 can determine location information of the terminal device 608 based on the positioning information, or the network device 607 can determine location information of the terminal device 608 based on the positioning information and feed back the location information to the network device 601.

For the fifth scenario, as illustrated in FIG. 6, a network device 609 can supply power to a terminal device 610, the network device 601 can trigger the terminal device 608 to report positioning information of the terminal device 610 and the terminal device 610 can report the positioning information of the terminal device 610 to the network device 601 through back scattering. In other words, in the fifth scenario, the network device 609 only plays the role of supplying the power.

The technical solutions of the present disclosure will be described in detail below.

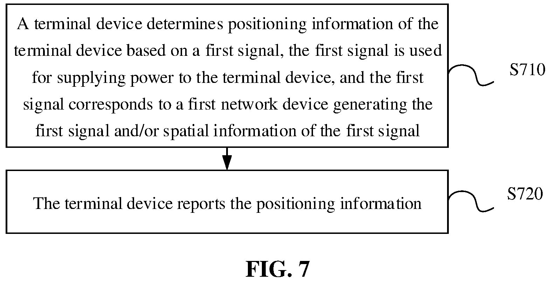

FIG. 7 is a flowchart of a method for wireless communication according to an embodiment of the present disclosure. As illustrated in FIG. 7, the method includes the following operations.

In S710, a terminal device determines positioning information of the terminal device based on a first signal, here, the first signal is used for supplying power to the terminal device, and the first signal corresponds to a first network device generating the first signal and/or spatial information of the first signal.

In S720, the terminal device reports the positioning information.

It should be noted that in the embodiment of the present disclosure, the first signal for supplying power to the terminal device may only play the role of supplying the power, in this case, the first signal is also called a power supply signal. Alternatively, if the first signal can also trigger the terminal device to report its own positioning information, in this case, the first signal is not only a power supply signal, but can be considered as a special power supply signal, such as a power supply signal with a triggering function. For example, the first signal can be transmitted on a specific resource, to implicitly indicate that the first signal is the special power supply signal.

In some implementations, the first signal, a signal associated with the first signal or a channel associated with the first signal carries an identifier of the first network device and/or a first identifier of the first signal. Alternatively, the first signal, a signal associated with the first signal or a channel associated with the first signal implicitly carries an identifier of the first network device and/or a first identifier of the first signal. Alternatively, the first signal, a signal associated with the first signal or a channel associated with the first signal explicitly or implicitly carries a second identifier of the first signal, here, the second identifier corresponds to the first network device and/or spatial information of the first signal.

In some implementations, the positioning information includes, but is not limited to, an identifier of the first network device and/or a first identifier of the first signal.

In some implementations, the positioning information may not carry an identifier of the first network device and/or a first identifier of the first signal, but implicitly represent the identifier of the first network device and/or the first identifier of the first signal. For example, the identifier of the first network device and/or the first identifier of the first signal are represented by sending the positioning information in at least one of a specific time domain, a specific frequency domain or a specific code domain.

In some implementations, the first network device is a network device that generates the first signal, the identifier of the first network device corresponds to the first network device, and the first identifier of the first signal corresponds to the spatial information of the first signal.

Exemplarily, as illustrated in FIG. 6, in the first scenario, the network device 601 is a network device that generates the first signal, and the first signal is used for supplying power to the terminal device 602. Based on this, the first network device may be the network device 601. In the second scenario, the network device 603 is a network device that generates the first signal, and the first signal is used for supplying power to the terminal device 604. Based on this, the first network device may be the network device 603. In the third scenario, the network device 605 is a network device that generates the first signal, and the first signal is used for supplying power to the terminal device 606. Based on this, the first network device may be the network device 605. In the fourth scenario, the network device 607 is a network device that generates the first signal, and the first signal is used for supplying power to the terminal device 608. Based on this, the first network device may be the network device 607. In the fifth scenario, the network device 609 is a network device that generates the first signal, and the first signal is used for supplying power to the terminal device 610. Based on this, the first network device may be the network device 609.

It should be understood that the identifier of the first network device corresponds to the first network device, which can be understood as follows. The identifier of the first network device is used for identifying the first network device. The first identifier of the first signal corresponds to the spatial information of the first signal, which can be understood as follows. The first identifier is used for identifying the spatial information of the first signal.

In some implementations, the spatial information of the first signal includes, but is not limited to, at least one of: an angle of the first signal, coordinates of the first signal, or a direction of the first signal.

It should be understood that when the first signal has the spatial information, it indicates that the first signal is a regional signal.

In some implementations, the first network device may send multiple signals, and the multiple signals are used for supplying power. The multiple signals include the first signal.

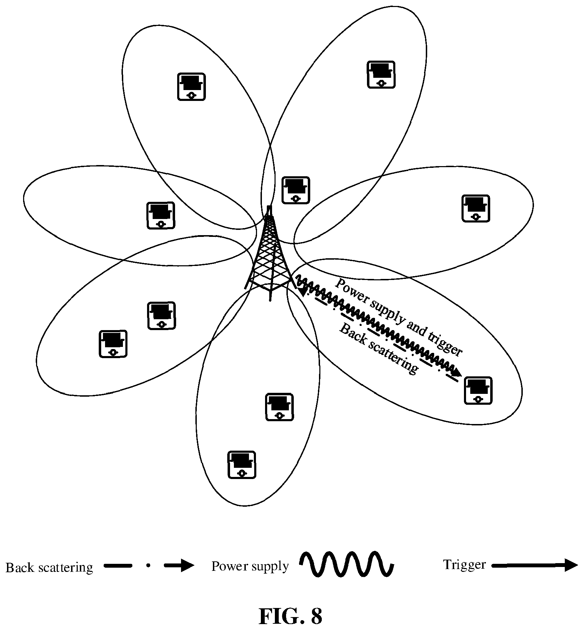

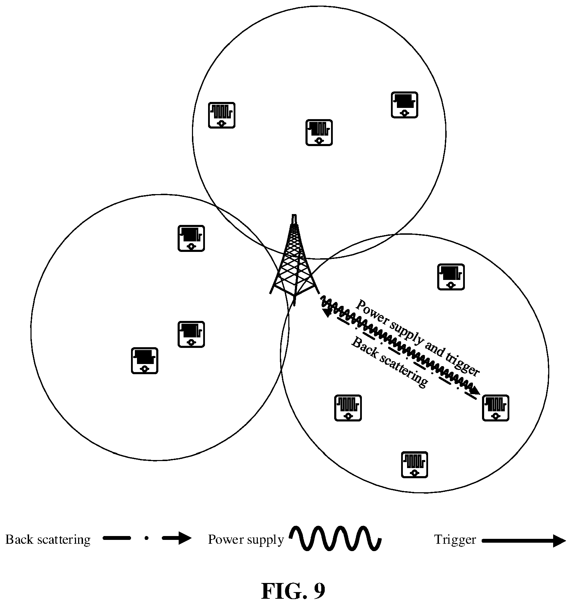

In some implementations, the multiple signals correspond to different spatial information. For example, as illustrated in FIG. 8 or FIG. 9, each ellipse or circle represents a transmitting direction area of a signal, and these transmitting direction areas are different in at least one of a direction, an angle, or coordinates.

It should be understood that in the embodiments of the present disclosure, the number of the multiple signals and/or a respective transmitting direction area corresponding to each signal may be set according to positioning requirements. To sum up, the number of the multiple signals and the respective transmitting direction area corresponding to each signal are not limited in the present disclosure.

In some implementations, the multiple signals are sent at different times or simultaneously. For example, the first network device may send the multiple signals at different times in a scanning manner or send the multiple signals simultaneously.

In some implementations, the multiple signals may be sent in a manner configured by a second network device or the first network device, which is not limited in the present disclosure.

In some implementations, frequency domain resources and/or code domain resources corresponding to any two of the multiple signals are different. For example, in case that the multiple signals are sent simultaneously, the frequency domain resources and/or code domain resources corresponding to any two of the multiple signals are different. Alternatively, in case that the multiple signals are sent at different times, the frequency domain resources and/or code domain resources corresponding to any two of the multiple signals are different.

In some implementations, the second network device sends second control information to the first network device. The second control information is used for controlling the first network device to send the first signal, and the second network device has an association relationship with the first network device.

In some implementations, the second network device is a device for controlling the first network device, and the second network device may also control more network devices. For example, as illustrated in FIG. 6, sending of the first signal by the network device 603, the network device 605 and the network device 607 may all be controlled by the network device 601.

Exemplarily, in the second scenario as illustrated in FIG. 6, the network device 601 may send second control information to the network device 603, to control the network device 603 to send the first signal. In the third scenario as illustrated in FIG. 6, the network device 601 may send second control information to the network device 605, to control the network device 605 to send the first signal. In the fourth scenario as illustrated in FIG. 6, the network device 601 may send second control information to the network device 607, to control the network device 607 to send the first signal. In the fifth scenario as illustrated in FIG. 6, the network device 601 may send second control information to the network device 609, to control the network device 609 to send the first signal.

In some implementations, the identifier of the first network device and/or the first identifier are carried in any one of: the first signal, a signal associated with the first signal or a channel associated with the first signal.

It should be understood that the signal associated with the first signal refers to a signal having an associated relationship with the first signal. For example, the signal associated with the first signal is a signal that is the same as the first signal in terms of at least one of a time domain resource, a frequency domain resource or a code domain resource, which is not limited in the present disclosure.

It should be understood that the channel associated with the first signal refers to a channel having an association relationship with the first signal. For example, the channel may be a channel carrying the first signal, or a channel adjacent to a channel carrying the first signal, which is not limited in the present disclosure.

In some implementations, after obtaining the positioning information of the terminal device, the first network device may determine location information of the terminal device based on the positioning information.

In some implementations, if the positioning information includes the identifier of the first network device, the first network device determines a coverage area of the first network device as location information of the terminal device. If the positioning information includes the first identifier of the first signal, the first network device determines a transmitting direction area of the first signal as location information of the terminal device. If the positioning information includes the identifier of the first network device and the first identifier of the first signal, the first network device determines location information of the terminal device based on a coverage area of the first network device and a transmitting direction area of the first signal. For example, the first network device determines an intersection area of the coverage area of the first network device and the transmitting area of the first signal as the location information of the terminal device.

Exemplarily, in the first scenario as illustrated in FIG. 6, the network device 601 may obtain the positioning information of the terminal device 602 and determine the location information of the terminal device 602 according to the above-described implementations for determining the location information of the terminal device. In the second scenario as illustrated in FIG. 6, the network device 603 may obtain the positioning information of the terminal device 604 and determine the location information of the terminal device 604 according to the above-described implementations for determining the location information of the terminal device. In the fourth scenario as illustrated in FIG. 6, the network device 607 may obtain the positioning information of the terminal device 608 and determine the location information of the terminal device 608 according to the above-described implementations for determining the location information of the terminal device.

In some implementations, after the first network device obtains the location information of the terminal device, the first network device may send the location information of the terminal device to the second network device.

Exemplarily, in the second scenario as illustrated in FIG. 6, after obtaining the location information of the terminal device 604, the network device 603 may send the location information of the terminal device 604 to the network device 601. In the fourth scenario as illustrated in FIG. 6, after obtaining the location information of the terminal device 608, the network device 607 may send the location information of the terminal device 608 to the network device 601.

In some implementations, the terminal device may directly send the positioning information of the terminal device to the second network device.

Exemplarily, in the third scenario as illustrated in FIG. 6, the terminal device 606 may send its own positioning information to the network device 601. In the fifth scenario as illustrated in FIG. 6, the terminal device 610 may send its own positioning information to the network device 601.

In some implementations, after the first network device obtains the positioning information of the terminal device, the first network device may send the positioning information of the terminal device to the second network device, so that the second network device determines the location information of the terminal device based on the positioning information. For the determination of the location information of the terminal device by the second network device, the reference may be made the method for determining the location information of the terminal device by the first network device, which is not described here.

Exemplarily, in the second scenario as illustrated in FIG. 6, after obtaining the positioning information of the terminal device 604, the network device 603 may send the positioning information of the terminal device 604 to the network device 601, so that the network device 601 determines the location information of the terminal device 604 based on the positioning information. In the fourth scenario as illustrated in FIG. 6, after obtaining the positioning information of the terminal device 608, the network device 607 may send the positioning information of the terminal device 608 to the network device 601, so that the network device 601 determines the location information of the terminal device 608 based on the positioning information.

It should be noted that in the above-described implementations, the positioning information may include the identifier of the first network device and/or the first identifier of the first signal. That is to say, the identifier of the first network device and the first identifier of the first signal are two independent identifiers. In practice, the positioning information may also be, but is not limited to, the following forms of information.

In some implementations, the positioning information includes a second identifier of the first signal.

In some implementations, the second identifier corresponds to the first network device and/or the spatial information of the first signal.

It should be understood that if the second identifier corresponds to the first network device and the spatial information of the first signal, it indicates that the second identifier can simultaneously identify the first network device and the spatial information of the first signal. In this case, the second identifier is a joint identifier. For the first network device and the spatial information of the first signal, the reference may be made to the above description and will not be repeated herein.

In some implementations, the second identifier may be carried in any one of the followings, but is not limited to: the first signal, a signal associated with the first signal and a channel associated with the first signal.

It should be understood that with respect to the signal associated with the first signal and the channel associated with the first signal, the reference may be made to the above description and will not be repeated herein.

It should be understood that as described above, the first signal for supplying power to the terminal device may only play the role of supplying the power, in which case the first signal is also referred to as a power supply signal. In this case, the first network device or the second network device may send triggering information to the terminal device, here, the triggering information is used for triggering the terminal device to determine positioning information of the terminal device based on the first signal.

Exemplarily, in the first scenario of FIG. 6, the network device 601 may send triggering information to the terminal device 602 to trigger the terminal device 602 to determine its own positioning information based on the first signal. In the second scenario of FIG. 6, the network device 603 may send triggering information to the terminal device 604 to trigger the terminal device 604 to determine its own positioning information based on the first signal. In the third scenario of FIG. 6, the network device 605 may send triggering information to the terminal device 606 to trigger the terminal device 606 to determine its own positioning information based on the first signal. In the fourth scenario of FIG. 6, the network device 601 may send triggering information to the terminal device 608 to trigger the terminal device 608 to determine its own positioning information based on the first signal. In the fifth scenario of FIG. 6, the network device 601 may send triggering information to the terminal device 610 to trigger the terminal device 610 to determine its own positioning information based on the first signal.

In some implementations, the triggering information and the first signal are carried on a same frequency domain resource or different frequency domain resources, but the present disclosure is not limited thereto.

Exemplarily, the triggering information may be carried on a carrier where the first signal is located. For example, the carrier where the first signal is located is modulated to carry the triggering information. Alternatively, the triggering information may be carried on a channel or signal other than the first signal, and the terminal device may demodulate the channel or signal based on the power supplied by the first signal to obtain the triggering information.

Exemplarily, in the first scenario of FIG. 6, the triggering information and the first signal sent by the network device 601 to the terminal device 602 may be carried on the same frequency domain resource or different frequency domain resources. In the second scenario of FIG. 6, the triggering information and the first signal sent by the network device 603 to the terminal device 604 may be carried on the same frequency domain resource or different frequency domain resources. In the third scenario of FIG. 6, the triggering information and the first signal sent by the network device 605 to the terminal device 606 may be carried on the same frequency domain resource or different frequency domain resources.

In some implementations, the triggering information includes, but is not limited to, at least one of: a second type identifier, an identifier of the terminal device or an identifier of a terminal device group. Here, the terminal device group includes the terminal device, and the identifier of the terminal device group is used for identifying the terminal device group. The second type identifier is used for identifying an information type of the triggering information.

In some implementations, from the definition of the triggering information described above, the triggering information is information for requesting the terminal device to determine the positioning information of the terminal device itself. Therefore, the second type identifier may identify a request type.

It should be understood that in the embodiments of the present disclosure, the second type identifier may also be referred to as query information, but the present disclosure is not limited thereto.

In some implementations, if the first network device or the second network device expects to obtain respective positioning information of all terminals covered by the first network device or respective positioning information of terminals in a specific area covered by the first network device, the triggering information may not include the identifier of the terminal device and the identifier of the terminal device group, but only include the second type identifier. Of course, the triggering information may also not include the second type identifier but may implicitly represent the second type identifier. For example, the first network device or the second network device sends one piece of information on a specific frequency domain resource and/or a specific code domain resource, and the terminal device determines that the piece of information is triggering information as long as the terminal device recognizes the piece of information on the specific frequency domain resource and/or the specific code domain resource.

In some implementations, if the first network device or the second network device expects to obtain positioning information of a specific terminal or a specific terminal group, the triggering information may include the identifier of the terminal device and/or the identifier of the terminal device group, and may further include the second type identifier.

It should be understood that any piece of information provided in the present disclosure may also be referred to as a signal, a message, data or the like. The information may be presented in an explicit or implicit manner, which is not limited in the present disclosure.

In some implementations, the second network device may send first control information to the first network device. The first control information is used for controlling the first network device to send the triggering information to the terminal device. In other words, the first network device can send the triggering information to the terminal device under control of the second network device. Of course, the first network device may not be controlled by the second network device, but actively send the triggering information to the terminal device, which is not limited in the present disclosure.

It should be understood that there is a transmission interface for the first control information between the second network device and the first network device. The first network device can send the first control information to the first network device through the interface.

Exemplarily, in the second scenario illustrated in FIG. 6, the network device 601 may send the first control information to the network device 603 to control the network device 603 to send the triggering information to the terminal device 604. In the third scenario illustrated in FIG. 6, the network device 601 may send first control information to the network device 605 to control the network device 605 to send triggering information to the terminal device 606.

In some implementations, the first control information includes, but is not limited to, at least one of: an identifier of the terminal device or an identifier of a terminal device group. The terminal device group includes the terminal device, and the identifier of the terminal device group is used for identifying the terminal device group.

In some implementations, if the second network device expects to obtain respective positioning information of all terminals covered by the first network device or respective positioning information of terminals in a specific area covered by the first network device, the first control information may not include the identifier of the terminal device and the identifier of the terminal device group.

In some implementations, if the second network device expects to obtain positioning information of a specific terminal or a specific terminal group, the first control information may include the identifier of the terminal device and/or the identifier of the terminal device group.

In some implementations, the positioning information described above may be understood as a response to the triggering information, but is not limited thereto. Based on this, the positioning information may include, but is not limited to, at least one of: a first type identifier or an identifier of the terminal device. The first type identifier is used for identifying an information type of the positioning information.

In some implementations, the positioning information may be understood as a response to the triggering information. Therefore, the first type identifier may identify a response type.

It should be understood that in the embodiments of the present disclosure, the first type identifier may also be referred to as confirm information, but the present disclosure is not limited thereto.

In some implementable manners, the identifier of the terminal device carried by the positioning information is used to identify that the positioning information is positioning information sent by the terminal device.

To sum up, in the present disclosure, a terminal device can determine positioning information of the terminal device based on the first signal and report the positioning information, so that a network side can realize the positioning of the terminal device based on the positioning information, and further realize the positioning of a location of an object to which the terminal device is attached.

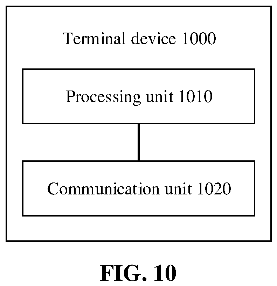

FIG. 10 illustrates a block diagram of a terminal device 1000 according to an embodiment of the present disclosure. The terminal device 1000 includes a processing unit 1010 and a communication unit 1020. The processing unit 1010 is configured to determine positioning information of the terminal device based on a first signal. The communication unit 1020 is configured to report the positioning information. The first signal is used for supplying power to the terminal device, and the first signal corresponds to a first network device generating the first signal and/or corresponds to spatial information of the first signal.

In some implementations, the positioning information includes an identifier of the first network device and/or a first identifier of the first signal.

In some implementations, the identifier of the first network device corresponds to the first network device, and the first identifier of the first signal corresponds to the spatial information of the first signal.

In some implementations, the communication unit 1020 is further configured to obtain the identifier of the first network device and/or the first identifier.

In some implementations, the identifier of the first network device and/or the first identifier are carried in any one of: the first signal, a signal associated with the first signal or a channel associated with the first signal.

In some implementations, the positioning information includes a second identifier of the first signal.

In some implementations, the second identifier corresponds to the first network device and/or the spatial information of the first signal.

In some implementations, the communication unit 1020 is further configured to obtain the second identity.

In some implementations, the second identifier is carried in any one of: the first signal, a signal associated with the first signal or a channel associated with the first signal.

In some implementations, the positioning information includes at least one of: a first type identifier or an identifier of the terminal device. The first type identifier is used for identifying an information type of the positioning information.

In some implementations, the communication unit 1020 is further configured to receive triggering information. The processing unit 1010 is specifically configured to determine, under trigger of the triggering information, the positioning information of the terminal device based on the first signal.

In some implementations, the triggering information and the first signal are carried on a same frequency domain resource or different frequency domain resources.

In some implementations, the triggering information includes at least one of: a second type identifier, an identifier of the terminal device or an identifier of a terminal device group. The terminal device group includes the terminal device, and the second type identifier is used for identifying an information type of the triggering information.

In some implementations, the communication unit 1020 is specifically configured to: report the positioning information to the first network device or a second network device. The second network device has an association relationship with the first network device.

In some implementations, the communication unit may be a communication interface or transceiver, or an input/output interface of a communication chip or system-on-chip. The processing unit may be one or more processors.

It should be understood that the terminal device 1000 according to the embodiment of the present disclosure may correspond to the terminal device in the method embodiments of the present disclosure, and the above and other operations and/or functions of the various units in the terminal device 1000 are respectively used for implementing the corresponding flows of the terminal device in the method embodiments. For the sake of brevity, details are not repeated here.

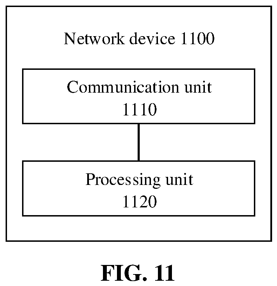

FIG. 11 illustrates a block diagram of a network device 1100 according to an embodiment of the present disclosure. The network device 1100 includes a communication unit 1110. The communication unit 1110 is configured to send a first signal to a terminal device. The first signal is used for supplying power to the terminal device and is used for determining positioning information of the terminal device, and the first signal corresponds to a first network device generating the first signal and/or corresponds to spatial information of the first signal.

In some implementations, the positioning information includes an identifier of the first network device and/or a first identifier of the first signal.

In some implementations, the identifier of the first network device corresponds to the first network device, and the first identifier corresponds to the spatial information of the first signal.

In some implementable manners, the identifier of the first network device and/or the first identifier are carried in any one of: the first signal, a signal associated with the first signal or a channel associated with the first signal.

In some implementations, the positioning information includes a second identifier of the first signal.

In some implementations, the second identifier corresponds to the first network device and/or the spatial information of the first signal.

In some implementations, the second identifier is carried in any one of: the first signal, a signal associated with the first signal or a channel associated with the first signal.

In some implementations, the positioning information includes at least one of: a first type identifier or an identifier of the terminal device. The first type identifier is used for identifying an information type of the positioning information.

In some implementations, the communication unit 1110 is further configured to send triggering information to the terminal device. The triggering information is used for triggering the terminal device to determine the positioning information of the terminal device based on the first signal.

In some implementations, the triggering information and the first signal are carried on a same frequency domain resource or different frequency domain resources.

In some implementations, the triggering information includes at least one of: a second type identifier, an identifier of the terminal device or an identifier of a terminal device group. The terminal device group includes the terminal device, and the second type identifier is used for identifying an information type of the triggering information.

In some implementations, the communication unit 1110 is further configured to receive first control information sent by a second network device. The second network device has an association relationship with the first network device, and the first control information is used for controlling the first network device to send the triggering information to the terminal device.

In some implementations, the communication unit 1110 is further configured to receive second control information sent by a second network device. The second network device has an association relationship with the first network device, and the second control information is used for controlling the first network device to send the first signal.

In some implementations, the first network device sends multiple signals, the multiple signals are used for supplying power, and the multiple signals include the first signal.

In some implementations, the multiple signals correspond to different spatial information.

In some implementations, the multiple signals are sent at different times or simultaneously.

In some implementations, frequency domain resources and/or code domain resources corresponding to any two of the multiple signals are different. For example, in case that the multiple signals are sent simultaneously, the frequency domain resources and/or code domain resources corresponding to any two of the multiple signals are different. Alternatively, in case that multiple signals are sent at different times, the frequency domain resources and/or code domain resources corresponding to any two of the multiple signals are different.

In some implementations, the network device 1100 further includes a processing unit 1120. The communication unit 1110 is further configured to receive the positioning information of the terminal device. The processing unit 1120 is configured to determine location information of the terminal device based on the positioning information.

In some implementations, the communication unit 1110 is further configured to send the location information of the terminal device to a second network device. The second network device has an association relationship with the first network device.

In some implementations, the communication unit 1110 is further configured to receive the positioning information of the terminal device; and send the positioning information to a second network device. The second network device has an association relationship with the first network device.

In some implementations, the communication unit may be a communication interface or transceiver, or an input/output interface of a communication chip or system-on-chip. The processing unit may be one or more processors.

It should be understood that the network device 1100 according to the embodiment of the present disclosure may correspond to the first network device in the method embodiments of the present disclosure, and the above and other operations and/or functions of the various units in the network device 1100 are respectively used for implementing the corresponding flows of the first network device in the method embodiments. For the sake of brevity, details are not repeated here.

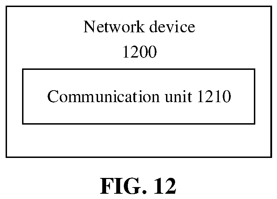

FIG. 12 illustrates a block diagram of a network device 1200 according to an embodiment of the present disclosure. The network device 1200 includes a communication unit 1210. The communication unit 1210 is configured to receive positioning information or location information of a terminal device. The positioning information is determined based on a first signal and is used for determining the location information of the terminal device, the first signal is used for supplying power to the terminal device, and the first signal corresponds to a first network device generating the first signal and/or corresponds to spatial information of the first signal.

In some implementations, the positioning information includes an identifier of the first network device and/or a first identifier of the first signal.

In some implementations, the identifier of the first network device corresponds to the first network device and the first identifier of the first signal corresponds to the spatial information of the first signal.

In some implementations, the identifier of the first network device and/or the first identifier of the first signal are carried in any one of: the first signal, a signal associated with the first signal or a channel associated with the first signal.

In some implementations, the positioning information includes a second identifier of the first signal.

In some implementations, the second identifier of the first signal corresponds to the first network device and/or the spatial information of the first signal.

In some implementations, the second identifier of the first signal is carried in any one of: the first signal, a signal associated with the first signal or a channel associated with the first signal.

In some implementations, the positioning information includes at least one of: a first type identifier or an identifier of the terminal device. The first type identifier is used for identifying an information type of the positioning information.

In some implementations, the communication unit 1210 is further configured to send first control information to the first network device. The first control information is used for controlling the first network device to send triggering information to the terminal device, and the triggering information is used for triggering the terminal device to determine the positioning information of the terminal device based on the first signal.

In some implementations, the communication unit 1210 is further configured to send second control information to the first network device. The second control information is used for controlling the first network device to send the first signal.

In some implementations, the communication unit 1210 may be a communication interface or transceiver, or an input/output interface of a communication chip or system-on-chip.

It should be understood that the network device 1200 according to the embodiment of the present disclosure may correspond to the second network device in the method embodiments of the present disclosure, and the above and other operations and/or functions of the various units in the network device 1200 are respectively used for implementing the corresponding flows of the second network device in the method embodiments. For the sake of brevity, details are not repeated here.

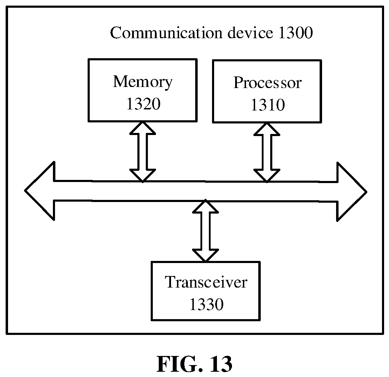

FIG. 13 is a diagram of a structure of a communication device 1300 according to an embodiment of the present disclosure. The communication device 1300 illustrated in FIG. 13 includes a processor 1310 that can invoke and run a computer program from a memory to implement the methods in the embodiments of the present disclosure.

In an embodiment, as illustrated in FIG. 13, the communication device 1300 may further include a memory 1320. The processor 1310 may invoke and run a computer program from the memory 1320 to implement the methods in the embodiments of the present disclosure.

The memory 1320 may be a separate device independent of the processor 1310 or may be integrated in the processor 1310.

In an embodiment, as illustrated in FIG. 13, the communication device 1300 may further include a transceiver 1330. The processor 1310 may control the transceiver 1330 to communicate with other devices, specifically, may send information or data to other devices or receive information or data sent by other devices.

The transceiver 1330 may include a transmitter and a receiver. The transceiver 1330 may further include antennas, the number of which may be one or more.

In an embodiment, the communication device 1300 may be specifically the network device in the embodiments of the present disclosure, and the communication device 1300 may implement corresponding flows implemented by the network device in various methods of the embodiments of the present disclosure. For the sake of brevity, details are not repeated here.

In an embodiment, the communication device 1300 may specifically be the terminal device in the embodiments of the present disclosure, and the communication device 1300 may implement corresponding flows implemented by the terminal device in various methods of the embodiments of the present disclosure. For the sake of brevity, details are not repeated here.

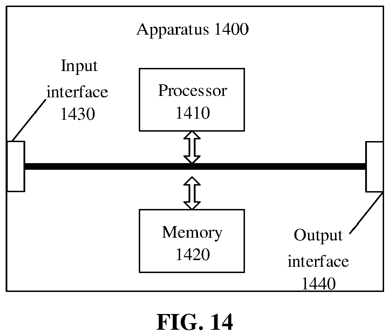

FIG. 14 is a diagram of a structure of an apparatus according to an embodiment of the present disclosure. The apparatus 1400 illustrated in FIG. 14 includes a processor 1410 that can invoke and run a computer program from a memory to implement the methods in the embodiments of the present disclosure.

In an embodiment, as illustrated in FIG. 14, the apparatus 1400 may further include a memory 1420. The processor 1410 may invoke and run a computer program from the memory 1420 to implement the methods in the embodiments of the present disclosure.

The memory 1420 may be a separate device independent of the processor 1410 or may be integrated within the processor 1410.

In an embodiment, the apparatus 1400 may further include an input interface 1430. The processor 1410 may control the input interface 1430 to communicate with other devices or chips, specifically, may obtain information or data sent by other devices or chips.

In an embodiment, the apparatus 1400 may further include an output interface 1440. The processor 1410 may control the output interface 1440 to communicate with other devices or chips, specifically, may output information or data to other devices or chips.

In an embodiment, the apparatus can be applied to the network device in the embodiments of the present disclosure, and the apparatus can implement the corresponding flows implemented by the network device in the various methods of the embodiments of the present disclosure. For the sake of brevity, details are not repeated here.

In an embodiment, the apparatus can be applied to the terminal device in the embodiments of the present disclosure, and the apparatus can implement the corresponding flows implemented by the terminal device in the various methods of the embodiments of the present disclosure. For the sake of brevity, details are not repeated here.

In an embodiment, the apparatus mentioned in the embodiments of the present disclosure may also be a chip. For example, the apparatus can be a system-level chip, a system chip, a chip system or a chip-on system chip.

It should be understood that the processor in the embodiments of the disclosure may be an integrated circuit chip with signal processing capability. In the implementation process, the operations of the foregoing method embodiments may be completed by the integrated logic circuits of the hardware in the processor or instructions in the form of software. The above-mentioned processor may be a general-purpose processor, a digital signal processor (DSP), an application specific integrated circuit (ASIC), a field programmable gate array (FPGA) or other programming logic devices, a discrete gate or transistor logic device, or a discrete hardware component. The methods, operations, and logical block diagrams disclosed in the embodiments of the disclosure may be implemented or executed. The general-purpose processor may be a microprocessor or the processor may further be any conventional processor or the like. The operations of the methods disclosed in the embodiments of the disclosure may be directly embodied as being executed and completed by a hardware decoding processor, or executed and completed by a combination of hardware and software modules in the decoding processor. The software modules may be located in a mature storage medium in the field such as a random access memory, a flash memory, a read-only memory, a programmable read-only memory, or an electrically erasable programmable memory or a register. The storage medium is located in the memory, and the processor reads the information in the memory and completes the operations of the above-mentioned methods in combination with its hardware.

It can be understood that the memory in the embodiments of the disclosure may be a volatile memory or a non-volatile memory, or may include both volatile and non-volatile memories. Among them, the non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. By way of exemplary but not restrictive description, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM)) and a direct rambus RAM (DR RAM). It should be noted that the memories of the systems and methods described herein are intended to include, but are not limited to, these and any other suitable types of memories.

It should be understood that the foregoing memories are exemplary but not restrictive. For example, the memory in the embodiments of the disclosure may further be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) or a direct rambus RAM (DR RAM), and the like. That is to say, the memory in the embodiments of the disclosure is intended to include, but is not limited to, these and any other suitable types of memories.

The embodiments of the present disclosure further provide a computer-readable storage medium for storing computer programs.

In an embodiment, the computer-readable storage medium may be applied to the network device or the base station in the embodiments of the present disclosure, and the computer programs cause a computer to execute corresponding flows implemented by the network device or the base station in the various methods of the embodiments of the present disclosure. For the sake of brevity, details are not repeated here.

In an embodiment, the computer-readable storage medium can be applied to the mobile terminal/terminal device in the embodiments of the present disclosure, and the computer programs cause a computer to execute corresponding flows implemented by the mobile terminal/terminal device in the various methods of the embodiments of the present disclosure. For the sake of brevity, details are not repeated here.

The embodiments of the present disclosure further provide a computer program product including computer program instructions.

In an embodiment, the computer program product may be applied to the network device or the base station in the embodiments of the present disclosure, and the computer program instructions cause a computer to execute corresponding flows implemented by the network device or the base station in the various methods of the embodiments of the present disclosure. For the sake of brevity, details are not repeated here.

In an embodiment, the computer program product may be applied to the mobile terminal/terminal device in the embodiments of the present disclosure, and the computer program instructions cause a computer to execute the corresponding flows implemented by the mobile terminal/terminal device in the various methods of the embodiments of the present disclosure. For the sake of brevity, details are not repeated here.

The embodiments of the present disclosure further provide a computer program.

In an embodiment, the computer program can be applied to the network device or the base station in the embodiments of the present disclosure, and when the computer program is run on the computer, the computer is caused to execute the corresponding flows implemented by the network device or the base station in the various methods of the embodiments of the present disclosure. For the sake of brevity, details are not repeated here.

In an embodiment, the computer program can be applied to the mobile terminal/terminal device in the embodiments of the present disclosure, and when the computer program is run on the computer, the computer is caused to execute the corresponding flows implemented by the mobile terminal/terminal device in the various methods of the embodiments of the present disclosure. For the sake of brevity, details are not repeated here.

Those of ordinary skill in the art may be aware that the units and algorithm operations of the examples described in the embodiments disclosed herein may be implemented by electronic hardware or a combination of computer software and electronic hardware. Whether these functions are executed by hardware or software depends on the specific application and design constraints of the technical solutions. Professionals and technicians can use different methods to implement the described functions of each specific application, but such implementation should not be considered beyond the scope of the disclosure.

Those skilled in the art will clearly appreciate that for the convenience and conciseness of description, the specific working process of the above-described systems, apparatuses and units may refer to the corresponding flows in the method embodiments, which will not be repeated herein.

In the several embodiments provided by the disclosure, it should be understood that the disclosed system, apparatus and method may be implemented in other ways. For example, the apparatus embodiments described above are only illustrative. For example, the division of the units is only the division of logical functions, and there may be other division manners in actual implementation. For example, multiple units or components may be combined or integrated into another system, or some features may be ignored or not implemented. In addition, the displayed or discussed mutual coupling or direct coupling or communication connection may be indirect coupling or communication connection through some interfaces, apparatuses or units, and may be in electrical, mechanical or other forms.

The units described as separate components may or may not be physically separate, and the components displayed as units may or may not be physical units, that is, they may be located in one place, or they may be distributed on multiple network units. Some or all of the units may be selected according to actual needs to achieve the objectives of the solutions of the present embodiments.

In addition, the functional units in each embodiment of the disclosure may be integrated into one processing unit, or each unit may exist separately and physically, or two or more units may be integrated into one unit.

If the function is implemented in the form of a software functional unit and is sold or used as an independent product, it can be stored in a computer readable storage medium. Based on such an understanding, the technical solution of the disclosure in essence or the part that contributes to the related art or the part of the technical solution may be embodied in the form of a software product, and the computer software product is stored in a storage medium including several instructions to cause a computer device (which may be a personal computer, a server or a network device, or the like.) to execute all or part of the operations of the method described in the each embodiment of the disclosure. The aforementioned storage medium includes: U disks, mobile hard disks, read-only memories (ROM), random access memories (RAM), magnetic disks or optical disks and other media that can store program codes.

The foregoing descriptions are merely specific embodiments of the present disclosure, but the protection scope of the present disclosure is not limited thereto. Any change or substitution that is readily conceived of by a person skilled in the art within the technical scope disclosed in the present disclosure shall fall within the protection scope of the present disclosure. Therefore, the protection scope of the present disclosure shall be subject to the protection scope of the claims.

## Claims

1. A method for wireless communication, comprising:
determining, by a terminal device, positioning information of the terminal device based on a first signal; and
reporting, by the terminal device, the positioning information,
wherein the first signal is used for supplying power to the terminal device, and the first signal corresponds to a first network device generating the first signal and/or spatial information of the first signal.

2. The method of claim 1, wherein the positioning information comprises an identifier of the first network device and/or a first identifier of the first signal.

3. The method of claim 2, wherein the identifier of the first network device corresponds to the first network device, and the first identifier of the first signal corresponds to the spatial information of the first signal.

4. The method of claim 2 or 3, further comprising:
obtaining, by the terminal device, the identifier of the first network device and/or the first identifier.

5. The method of claim 4, wherein the identifier of the first network device and/or the first identifier are carried in any one of: the first signal, a signal associated with the first signal or a channel associated with the first signal.

6. The method of claim 1, wherein the positioning information comprises a second identifier of the first signal.

7. The method of claim 6, wherein the second identifier corresponds to the first network device and/or the spatial information of the first signal.

8. The method of claim 6 or 7, further comprising:
obtaining, by the terminal device, the second identifier.

9. The method of claim 8, wherein the second identifier is carried in any one of: the first signal, a signal associated with the first signal or a channel associated with the first signal.

10. The method of any one of claims 1 to 9, wherein the positioning information comprises at least one of: a first type identifier or an identifier of the terminal device,
wherein the first type identifier is used for identifying an information type of the positioning information.

11. The method of any one of claims 1 to 10, further comprising:
receiving, by the terminal device, triggering information; and
determining, by the terminal device, the positioning information of the terminal device based on the first signal comprises:
determining, by the terminal device, under trigger of the triggering information, the positioning information of the terminal device based on the first signal.

12. The method of claim 11, wherein the triggering information and the first signal are carried on a same frequency domain resource or different frequency domain resources.

13. The method of claim 11 or 12, wherein the triggering information comprises at least one of: a second type identifier, an identifier of the terminal device or an identifier of a terminal device group,
wherein the terminal device group comprises the terminal device, and the second type identifier is used for identifying an information type of the triggering information.

14. The method of any one of claims 1 to 13, wherein reporting, by the terminal device, the positioning information comprises:
reporting, by the terminal device, the positioning information to the first network device or a second network device,
wherein the second network device has an association relationship with the first network device.

15. A method for wireless communication, comprising:
sending, by a first network device, a first signal to a terminal device,
wherein the first signal is used for supplying power to the terminal device and determining positioning information of the terminal device, and the first signal corresponds to a first network device generating the first signal and/or spatial information of the first signal.

16. The method of claim 15, wherein the positioning information comprises an identifier of the first network device and/or a first identifier of the first signal.

17. The method of claim 16, wherein the identifier of the first network device corresponds to the first network device, and the first identifier corresponds to the spatial information of the first signal.

18. The method of claim 16 or 17, wherein the identifier of the first network device and/or the first identifier are carried in any one of: the first signal, a signal associated with the first signal or a channel associated with the first signal.

19. The method of claim 15, wherein the positioning information comprises a second identifier of the first signal.

20. The method of claim 19, wherein the second identifier corresponds to the first network device and/or the spatial information of the first signal.

21. The method of any one of claims 22 to 24, wherein the second identifier is carried in any one of: the first signal, a signal associated with the first signal or a channel associated with the first signal.

22. The method of any one of claims 15 to 21, wherein the positioning information comprises at least one of: a first type identifier or an identifier of the terminal device,
wherein the first type identifier is used for identifying an information type of the positioning information.

23. The method of any one of claims 15 to 22, further comprising:
sending, by the first network device, triggering information to the terminal device,
wherein the triggering information is used for triggering the terminal device to determine the positioning information of the terminal device based on the first signal.

24. The method of claim 23, wherein the triggering information and the first signal are carried on a same frequency domain resource or different frequency domain resources.

25. The method of claim 23 or 24, wherein the triggering information comprises at least one of: a second type identifier, an identifier of the terminal device or an identifier of a terminal device group,
wherein the terminal device group comprises the terminal device, and the second type identifier is used for identifying an information type of the triggering information.

26. The method of any one of claims 23 to 25, further comprising:
receiving, by the first network device, first control information sent by a second network device,
wherein the second network device has an association relationship with the first network device, and the first control information is used for controlling the first network device to send the triggering information to the terminal device.

27. The method of any one of claims 15 to 26, further comprising:
receiving, by the first network device, second control information sent by a second network device,
wherein the second network device has an association relationship with the first network device, and the second control information is used for controlling the first network device to send the first signal.

28. The method of any one of claims 15 to 27, wherein the first network device sends a plurality of signals, the plurality of signals are used for supplying power, and the plurality of signals comprise the first signal.

29. The method of claim 28, wherein the plurality of signals correspond to different spatial information.

30. The method of claim 28 or 29, wherein the plurality of signals are sent at different times or simultaneously.

31. The method of claim 30, wherein frequency domain resources and/or code domain resources corresponding to any two of the plurality of signals are different.

32. The method of any one of claims 15 to 31, further comprising:
receiving, by the first network device, the positioning information of the terminal device; and
determining, by the first network device, location information of the terminal device based on the positioning information.

33. The method of claim 32, further comprising:
sending, by the first network device, the location information of the terminal device to a second network device,
wherein the second network device has an association relationship with the first network device.

34. The method of any one of claims 15 to 33, further comprising:
receiving, by the first network device, the positioning information of the terminal device; and
sending, by the first network device, the positioning information to a second network device,
wherein the second network device has an association relationship with the first network device.

35. A method for wireless communication, comprising:
receiving, by a second network device, positioning information or location information of a terminal device,
wherein the positioning information is determined based on a first signal and is used for determining the location information of the terminal device, the first signal is used for supplying power to the terminal device, and the first signal corresponds to a first network device generating the first signal and/or spatial information of the first signal.

36. The method of claim 35, wherein the positioning information comprises an identifier of the first network device and/or a first identifier of the first signal.

37. The method of claim 36, wherein the identifier of the first network device corresponds to the first network device, and the first identifier of the first signal corresponds to the spatial information of the first signal.

38. The method of claim 36 or 37, wherein the identifier of the first network device and/or the first identifier of the first signal are carried in any one of: the first signal, a signal associated with the first signal or a channel associated with the first signal.

39. The method of claim 35, wherein the positioning information comprises a second identifier of the first signal.

40. The method of claim 39, wherein the second identifier of the first signal corresponds to the first network device and/or the spatial information of the first signal.

41. The method of claim 39 or 40, wherein the second identifier of the first signal is carried in any one of: the first signal, a signal associated with the first signal or a channel associated with the first signal.

42. The method of any one of claims 35 to 41, wherein the positioning information comprises at least one of: a first type identifier or an identifier of the terminal device,
wherein the first type identifier is used for identifying an information type of the positioning information.

43. The method of any one of claims 35 to 42, further comprising:
sending, by the second network device, first control information to the first network device,
wherein the first control information is used for controlling the first network device to send triggering information to the terminal device, and the triggering information is used for triggering the terminal device to determine the positioning information of the terminal device based on the first signal.

44. The method of any one of claims 35 to 43, further comprising:
sending, by the second network device, second control information to the first network device,
wherein the second control information is used for controlling the first network device to send the first signal.

45. A terminal device, comprising:
a processing unit, configured to determine positioning information of the terminal device based on a first signal; and
a communication unit, configured to report the positioning information,
wherein the first signal is used for supplying power to the terminal device, and the first signal corresponds to a first network device generating the first signal and/or spatial information of the first signal.

46. A network device, the network device being a first network device, comprising:
a communication unit, configured to send a first signal to a terminal device,
wherein the first signal is used for supplying power to the terminal device and determining positioning information of the terminal device, and the first signal corresponds to the first network device generating the first signal and/or spatial information of the first signal.

47. A network device, the network device being a second network device, comprising:
a communication unit, configured to receive positioning information or location information of a terminal device,
wherein the positioning information is determined based on a first signal and is used for determining the location information of the terminal device, the first signal is used for supplying power to the terminal device, and the first signal corresponds to a first network device generating the first signal and/or spatial information of the first signal.

48. A terminal device, comprising: a memory for storing a computer program, and a processor configured to invoke and run the computer program stored in the memory to perform the method of any one of claims 1 to 14.

49. A network device, comprising: a memory for storing a computer program, and a processor configured to invoke and run the computer program stored in the memory to perform the method of any one of claims 15 to 44.

50. A chip, comprising: a processor configured to invoke and run a computer program from a memory to cause a device installed with the chip to perform the method of any one of claims 1 to 14.

51. A chip, comprising: a processor configured to invoke and run a computer program from a memory to cause a device installed with the chip to perform the method of any one of claims 15 to 44.

52. A computer-readable storage medium for storing a computer program that causes a computer to perform the method of any one of claims 1 to 14.

53. A computer-readable storage medium for storing a computer program that causes a computer to perform the method of any one of claims 15 to 44.

54. A computer program product comprising computer program instructions that cause a computer to perform the method of any one of claims 1 to 14.

55. A computer program product comprising computer program instructions that cause a computer to perform the method of any one of claims 15 to 44.

56. A computer program for causing a computer to perform the method of any one of claims 1 to 14.

57. A computer program for causing a computer to perform the method of any one of claims 15 to 44.
